# EUROPÄISCHE PATENTSCHRIFT

(11) **EP 2 753 514 B1**
(45) Veröffentlichungstag und Bekanntmachung des Hinweises auf die Patenterteilung: **15.11.2017**
(21) Anmeldenummer: 12758835.8
(22) Anmeldetag: 07.09.2012
(51) Int. Cl.: B60T 8/17

(54) **WERKZEUG ZUR BREMSANLAGENENTWICKLUNG FÜR SCHIENENFAHRZEUGE**
TOOL FOR DEVELOPING BRAKING SYSTEMS FOR RAIL VEHICLES
OUTIL DE DÉVELOPPEMENT DE SYSTÈMES DE FREINAGE POUR VÉHICULES FERROVIAIRES

(30) Priorität: 09.09.2011 DE 102011113024
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: RAU, Rainer, 82538 Geretsried (DE); TRINKBERGER, Andreas, 85435 Erding (DE); SCHMID, Ralf, 80993 München (DE); GREMMEL, Heiko, 80997 München (DE)
(86) Internationale Anmeldenummer: PCT/EP2012/067568
(87) Internationale Veröffentlichungsnummer: WO 2013/034732

(56) Entgegenhaltungen:
- EP-A1- 0 391 047
- EP-A2- 1 083 360
- EP-A2- 1 396 802
- EP-A2- 1 905 636
- EP-A2- 1 950 111
- WO-A1-2004/054840
- DE-A1- 3 803 639
- DE-A1- 10 157 449
- US-A1- 2009 255 329
- US-B1- 7 117 137

## Beschreibung

Die vorliegende Erfindung betrifft ein Werkzeug zur Bremsanlagenentwicklung für Schienenfahrzeuge mit einer Bremsanlage, welche mehrere Bremsen aufweist, die jeweils auf unterschiedlicher Art eine Bremswirkung erzeugen. Die Erfindung betrifft außerdem ein computerlesbares Speichermedium, auf dem auf einem Computersystem ausführbarer Programmcode gespeichert ist, welcher ein derartiges Werkzeug implementiert. Ferner betrifft die Erfindung ein Verfahren zur Bremssystementwicklung für ein Schienenfahrzeug mit einer Bremsanlage, welche mehrere Bremsen aufweist, die jeweils auf unterschiedliche Art eine Bremswirkung erzeugen. Aus den Entgegenhaltungen DE US 2009/255329 A1 oder US 7117137 B1 sind derartige Werkzeuge bekannt, die allerdings Einsatz in Betrieb von Scheinenfahrzeuge finden, aber nicht in der Entwicklungsphase derselben.

Bei der Entwicklung von Bremsanlagen für Schienenfahrzeuge müssen viele verschiedene Bedingungen berücksichtigt werden, um eine Bremsanlage bereitstellen zu können. Einerseits müssen Eigenschaften der Bremsanlage berücksichtigt werden, andererseits müssen gegebenenfalls Kundenwünsche und gesetzliche Vorgaben erfüllt werden. Insbesondere bei Bremsanlagen, welche mehrere Bremsen mit unterschiedlichen Wirkungsweisen aufweisen, kann eine Entwicklung der Bremsanlage sehr komplex sein. Insbesondere wird die Entwicklung durch die Notwendigkeit oder Möglichkeit verkompliziert, eine zu erreichende Bremskraft auf mehrere Bremsen zu verteilen und gleichzeitig die Bremsanlage so auszulegen, dass sie auch im Notfall bei einem Ausfall einiger Bremsen eine sichere Bremsung ermöglicht. Darüber hinaus müssen neben Erfordernissen hinsichtlich einer zu erreichenden Bremskraft oder Bremskraftverteilung beispielsweise auch thermische Bedingungen bei einem Bremsvorgang erfüllt werden.

Eine Aufgabe der vorliegenden Erfindung besteht darin, einen integrierten Ansatz zur Entwicklung von Bremsanlagen für Schienenfahrzeuge zu ermöglichen, mit dem eine schnellere Bremsanlagenentwicklung durchführbar wird und der eine frühzeitige Optimierung einer Bremsanlage ermöglicht.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug zum Betrieb auf einer Schiene vorgesehen sein. Das Schienenfahrzeug kann einen oder mehrere Wagen und/oder Zugfahrzeuge aufweisen. Ein Wagen eines Schienenfahrzeugs kann ein Triebwagen sein, der über einen eigenen Antrieb verfügt. Ein Werkzeug zur Bremsanlagenentwicklung kann Einrichtungen aufweisen, die bestimmte Aufgaben durchzuführen vermögen. Das Werkzeug und/oder die Einrichtungen können als Software, Hardware oder Kombinationen aus Software und Hardware implementiert sein. Jede Einrichtung kann eine oder mehrere Schnittstellen aufweisen, um geeignete Daten mit anderen Einrichtungen des Werkzeugs austauschen zu können. Es ist vorstellbar, dass eine Einrichtung mehrere Funktionen übernimmt. Beispielsweise kann eine Simulationseinrichtung ebenfalls als Einleseeinrichtung und/oder Ausgabeeinrichtung dienen. Es ist vorstellbar, dass eine Einrichtung als eine oder mehrere Module und/oder Prozesse und/oder Objekte und/oder Threads implementiert ist. In einem Werkzeug oder einer Einrichtung des Werkzeugs kann ein Abbild eines Schienenfahrzeugs erzeugt und/oder simuliert werden. Die hierin erwähnten Eigenschaften und Merkmale eines Schienenfahrzeugs und seiner Komponenten können sich auf das Abbild des Schienenfahrzeugs beziehen. Das Schienenfahrzeug kann beispielsweise im Entwicklungsstadium sein und muss nicht notwendigerweise physisch vorhanden sein. Die Entwicklung einer Bremsanlage kann insbesondere das Bestimmen einer geeigneten Bremskraftverteilung zwischen mehreren Bremsen für unterschiedliche Bremsbedingungen umfassen. Eine Bremsanlage eines Schienenfahrzeugs kann allgemein mehrere Bremsen aufweisen, die nach unterschiedlichen Prinzipien funktionieren. Eine Bremse kann beispielsweise eine Reibungsbremse, eine dynamische Bremse, eine Schienenbremse oder eine sonstige Bremse wie eine aerodynamische Bremse sein. Eine Bremse kann mehrere Bremseinrichtungen aufweisen, die zum Bremsen einzelner Wagen, Räder und/oder Radachsen eines Schienenfahrzeugs vorgesehen sein können. Eine Reibungsbremse kann etwa eine Klotzbremse, eine Scheibenbremse oder eine kombinierte Klotz-Scheiben-Bremse sein. Eine Reibungsbremse kann hydraulisch, pneumatisch oder elektrisch betätigbar sein. Eine hydraulisch betätigte Reibungsbremse kann als hydraulische Bremse bezeichnet werden. Eine pneumatisch betätigte Reibungsbremse kann als pneumatische Bremse bezeichnet sein. Eine pneumatische Bremse kann eine direkte oder eine indirekte pneumatische Bremse sein. Bei einer direkten pneumatischen Bremse wird ein Bremsdruck direkt auf eine Bremseinrichtung angesteuert, während bei einer indirekten pneumatischen Bremse ein Bremsdruckabfall in einer Hauptsteuerleitung zum indirekten Betätigen einer Bremseinrichtung eingesetzt wird. Reibungsbremsen werden als zuverlässige Ergänzung zu dynamischen Bremsen eingesetzt, da dynamische Bremsen in der Regel nicht in allen Bremssituationen die erforderliche Bremskraft bereitstellen können. Insbesondere werden Reibungsbremsen als Notbremsen eingesetzt, da sie eine hohe Betriebssicherheit aufweisen und auch bei Ausfall von Steuereinheiten zuverlässig hohe Bremskräfte zur Verfügung stellen können. Eine Reibungsbremse weist Reibkomponenten auf, die beispielsweise Bremsbeläge, Bremsscheiben und/oder Bremsklötze sein können. Bei der Umsetzung einer Betätigungskraft einer Bremseinrichtung einer Reibungsbremse in eine Bremskraft spielt neben einem Kraftschluss zwischen Rad und Schiene auch noch ein Reibwert zwischen Reibkomponenten der Bremseinrichtungen eine wichtige Rolle. Dieser Reibwert bestimmt das Maß an Kraft, welches zwischen aneinander reibenden Reibkomponenten übertragbar ist. Eine dynamische Bremse kann eine elektrodynamische Bremse, eine rotierende Wirbelstrombremse oder eine hydrodynamische Bremse sein. Elektrodynamische Bremsen können beispielsweise Motorbremsen eines Schienenfahrzeugs mit einem Elektromotor sein. Dynamische Bremsen sind im Wesentlichen verschleißfreie Bremsen. Eine dynamische Bremse kann eine generatorische oder regenerative Bremse sein, welche es vermag, bei einer Betätigung während einer Bremsung Energie aus der Bremsung zurück zu gewinnen und gegebenenfalls zu speichern. Dynamische Bremsen und Reibungsbremsen sind kraftschlussabhängige Bremsen, deren Bremskraft über einen Rad-Schiene-Kontakt übertragen wird. Hingegen sind Schienenbremsen und aerodynamische Bremsen sogenannte kraftschlussunabhängige Bremsen, deren Bremskraft nicht über Räder des Schienenfahrzeugs übertragen wird. Eine Schienenbremse kann eine Magnetschienenbremse oder eine lineare Wirbelstrombremse sein. Die aufgezählten Arten von Bremsen weisen jeweils unterschiedliche Bremswirkungsprinzipien auf, bei denen eine Bremskraft unterschiedlich erzeugt wird oder unterschiedliche Betätigungskräfte zur Erzeugung einer Bremskraft wirken. Bremsen einer Bremsanlage können separat voneinander ansteuerbar auf einem Schienenfahrzeug vorgesehen sein. Bei modernen Schienenfahrzeugen werden vorzugsweis dynamische Bremsen eingesetzt, um einen Verschleiß der Bremsen möglichst gering halten zu können. Da dynamische Bremsen im Vergleich zu Reibungsbremsen in der Regel eine geringere Bremswirkung auszuüben vermögen, reicht ihre Bremswirkung nicht für alle Bremssituationen aus. Daher werden bei Bremsvorgängen häufig zusätzlich zu den dynamischen Bremsen Reibungsbremsen und/oder kraftschlussunabhängige Bremsen eingesetzt, um eine gewünschte Bremswirkung zu erreichen. Bei der Auslegung einer Bremsanlage muss allerdings berücksichtigt werden, dass gegebenenfalls eine Reibungsbremse allein eine Notbremsung durchführen können muss. Eine Bremskraft oder Bremswirkung beschreibt allgemein eine Kraft oder Wirkung, die zu einer Abbremsung des Schienenfahrzeugs führt. Auf ein Fahrzeug kann dabei eine Gesamtbremskraft wirken, die sich aus einzelnen Bremskraftbeiträgen mehrerer bei einem Bremsvorgang betätigter Bremsen zusammensetzen kann. Als eine Betätigungskraft kann eine Kraft angesehen werden, die auf eine Bremseinrichtung ausgeübt wird, um eine Bremskraft zu erzeugen. Eine Betätigungskraft kann durch einen Krafterzeuger bereitgestellt sein, beispielsweise einen pneumatisch betätigten Zylinder einer pneumatischen Bremse. Allgemein muss beim Einsatz mehrerer Bremsen gleichzeitig eine aufzubringende Bremskraft auf die unterschiedlichen Bremsen verteilt werden. Diese Bremskraftverteilung wird auch als Blending bezeichnet. Blending kann insbesondere eine Bremskraftverteilung zwischen einer dynamischen Bremse und einer Reibungsbremse bezeichnen. Parameter können allgemein Daten sein, welche bestimmte Werte und/oder Wertebereiche spezifizieren. Insbesondere können Parameter einen Wert und mögliche Abweichungen von diesem Wert spezifizieren, beispielsweise einen Reibwert und mögliche stochastische Verteilungen für einen solchen Wert. Es ist vorstellbar, dass Parameter in algorithmischer Form oder als Formel bereitgestellt sind. Parameter können von einem oder mehreren anderen Parametern abhängen. Parameter können in der Form eines oder mehrerer Datensätze vorliegen. Fahrzeugparameter können allgemein Parameter eines Fahrzeugs beschreiben, etwa eine Anzahl und Anordnung von Wagen und/oder Art der Wagen und/oder Antriebseinrichtungen der Wagen, Zugfahrzeugen und/oder Triebwagen und/oder Anordnung von Rädern und/oder Drehgestellen des Fahrzeugs und/oder Parameter bezüglich einer Leittechnik und/oder Geschwindigkeitszustände des Fahrzeugs, insbesondere eine Höchstgeschwindigkeit. Fahrzeugparameter können ferner einen Fahrwiderstand des Fahrzeugs betreffen, der eine Bremswirkung erzeugen kann. Ein Fahrwiderstand kann etwa einen Windwiderstand und/oder Rollwiderstand und/oder Kurvenwiderstand beschreiben. Parameter bezüglich der Leittechnik können insbesondere eine Anordnung von elektronischen und/oder pneumatischen oder hydraulischen Steuereinrichtungen betreffen. Es ist insbesondere vorstellbar, dass Parameter bezüglich der Leittechnik Datenkommunikationsverbindungen zwischen Steuereinrichtungen des Schienenfahrzeugs betreffen. Leittechnikparameter können insbesondere Steuereinrichtungen der Bremsanlage und/oder Schnittstellen zwischen Steuereinrichtung der Bremsanlage und einer Antriebssteuerung beschreiben. Ferner können Parameter bezüglich der Leittechnik beispielsweise eine Hierarchie von Steuereinrichtungen des Schienenfahrzeugs und/oder Reaktionszeiten und/oder Datenübertragungszeiten der Leittechnik betreffen. Fahrzeugparameter können ferner eine Masse und/oder Massenverteilung und/oder ein Gewicht und/oder eine Gewichtsverteilung und/oder mechanische Verbindungen von Wagen des Fahrzeugs betreffen. Bremsanlagenparameter können insbesondere das Vorhandensein, Art und Anordnung von Bremsen und insbesondere die Anordnung von einzelnen Bremseinrichtungen von Bremsen betreffen. Bremsanlagenparameter können auch die von einer Bremse und/oder Bremseinrichtung ausübbare Bremskraft und/oder einen bei einer Bremsung erzeugten Verschleiß einer Bremse oder Bremseinrichtung und/oder eine erzeugte Bremsleistung umfassen. Insbesondere kann vorgesehen sein, dass Bremsanlagenparameter thermische Eigenschaften und/oder Reibeigenschaften von Komponenten der Bremsanlage beschreiben, insbesondere von Reibkomponenten von Reibungsbremsen. Bremsanlagenparameter können in Abhängigkeit von einer Fahrzeuggeschwindigkeit und/oder von einer ausgeübten Bremskraft und/oder einer Betätigungskraft und/oder weiteren Parametern angegeben sein. So hängt beispielsweise eine von einer Reibungsbremse erzeugte thermische Leistung bei einer Bremsung unter anderem von einer Fahrzeuggeschwindigkeit und einer ausgeübten Bremskraft oder Betätigungskraft ab und kann somit in Abhängigkeit von derartigen Parametern parametrisiert sein. Es ist vorstellbar, dass Bremsbedingungsparameter eine Geräuschentwicklung einer Bremse und/oder einzelner Bremseinrichtungen während einer Bremsung beschreiben. Bremsbedingungsparameter können eine Bedingung beschreiben, welcher ein Bremsvorgang unterliegen soll. Als Bremsbedingungsparameter können beispielsweise eine Anfangsgeschwindigkeit eines Schienenfahrzeugs bei Beginn einer Bremsung und/oder eine zu erreichende Endgeschwindigkeit bei Beendung der Bremsung vorgesehen sein. Es ist vorstellbar, dass Bremsbedingungsparameter bestimmte thermische Bedingungen repräsentieren, die während einer Bremsung einzuhalten sind. Beispielsweise können derartige thermische Bedingungen eine maximale Temperatur für eine oder mehrere Reibkomponenten definieren, die während einer Bremsung oder eines bestimmten Bremsvorgangs zulässig ist. Bremsbedingungsparameter können ferner äußere Bedingungen betreffen, welche sich auf eine Bremsung auswirken können. Bremsbedingungsparameter können beispielsweise Schienenbedingungen und/oder einen Kraftschluss und/oder Kraftschlussbereich beschreiben, der bei einem oder mehreren Bremsvorgängen vorliegen soll. Ein Kraftschluss kann dabei den Kraftschluss zwischen einem Rad und einer Schiene beschreiben, der bei einer Bremsung herrscht. Ein solcher Kraftschluss hängt stark von den Reibungsbedingungen zwischen Rad und Schiene ab, beispielsweise davon, ob sich auf der Schiene eine Zwischenschicht ausgebildet hat. Ein Kraftschluss bestimmt das Maß an Bremskraft, welches über einen Rad-Schiene-Kontakt aufnehmbar ist. Insbesondere ist bei einer Bremsung zu berücksichtigen, dass kraftschlussabhängige Bremsen nur eine Bremskraft zum Wirken bringen können, die durch den Kraftschluss vorgegeben ist. Wird auf ein Rad eine Kraft zur Bremsung ausgeübt, die über den Kraftschluss nicht aufgenommen werden kann, kann das Rad ins Gleiten oder Blockieren geraten. Bremsbedingungsparameter können ferner bestimmte Bremsanforderungen und/oder bestimmte Fahrzeugverzögerungen und/oder bestimmte Fahrzeugverzögerungen innerhalb einer bestimmten Zeit und/oder bestimmte Reaktionszeiten bis zur Umsetzung einer Bremsanforderung betreffen. Darüber hinaus können Bremsbedingungsparameter allgemein Nebenbedingungen für eine Bremsung repräsentieren, die beispielsweise Kundenvorgaben und/oder gesetzlichen Vorgaben entsprechen können. Nebenbedingungen können beispielsweise einen bestimmten Verschleiß von Reibkomponenten und/oder eine bestimmte Abbremsungszeit und/oder eine bestimmte Abbremsungsstrecke und/oder eine bestimmte Energierückgewinnung durch eine oder mehrere generatorische oder regenerative Bremsen und/oder eine bestimmte Geräuschentwicklung während der Bremsung repräsentieren. Allgemein können bestimmte Werte für Parameter auch einen bestimmten Bereich und/oder eine Untergrenze und/oder eine Obergrenze für einen Wert betreffen. So kann beispielsweise eine Obergrenze für einen Verschleiß von Reibkomponenten als bestimmter Wert eines Bremsbedingungsparameters angesehen werden. Auch ein Betriebszustand einer Bremse, insbesondere der Ausfall einer Bremse und/oder einer oder mehrerer Bremseinrichtungen kann als Nebenbedingung parametrisiert oder als Bremsbedingungsparameter angegeben sein. Es ist vorstellbar, dass ein teilweiser oder vollständiger Ausfall der Leittechnik als Bremsbedingungsparameter repräsentiert ist. Ein Satz von Bremsbedingungsparametern kann allgemein eine Bremsbedingung oder Bremssituation repräsentieren oder beschreiben. Bremsbedingungen können dadurch unterschieden sein, dass sich mindestens ein Bremsbedingungsparameter der Bremsbedingungen unterscheidet.

Erfindungsgemäß ist ein Werkzeug zur Bremsanlagenentwicklung für Schienenfahrzeuge mit einer Bremsanlage vorgesehen. Die Bremsanlage weist mehrere Bremsen auf, die jeweils auf unterschiedliche Art eine Bremswirkung erzeugen. Das Werkzeug umfasst eine Einleseeinrichtung, die es vermag, eine Konfiguration eines Schienenfahrzeugs einzulesen, wobei die Konfiguration Fahrzeugparameter und Bremsanlagenparameter des Schienenfahrzeugs umfasst. Das Werkzeug umfasst ferner eine Simulationseinrichtung, die es vermag, basierend auf der Konfiguration unter Berücksichtigung von Bremsbedingungsparametern Bremsvorgänge des Schienenfahrzeugs zu simulieren, wobei bei der Simulation eine Bremskraftverteilung zwischen den mehreren Bremsen und eine thermische Belastung von Komponenten der Bremsen berücksichtigt werden. Die Simulationseinrichtung vermag es, Ergebnisse der Simulation als Ergebnisdaten bereitzustellen. Ferner umfasst das Werkzeug eine Ausgabeeinrichtung, die es vermag, eine Ausgabe basierend auf Ergebnisdaten bereitzustellen. Somit kann erfindungsgemäß eine Simulation der Bremsanlage eines Schienenfahrzeugs durchgeführt werden, bei der eine Bremskraftverteilung und eine thermische Belastung berücksichtigt werden. Bereits bei der Entwicklung einer Bremsanlage und der Festlegung einer Bremskraftverteilung kann also die Konsistenz der Bremskraftverteilung mit thermischen Erfordernissen oder thermischen Bedingungen für die Bremsanlage berücksichtigt werden. Insbesondere ist es zweckmäßig, wenn die Konfiguration alle Bremsen der Bremsanlagen des Schienenfahrzeugs beschreibt. Bei der Simulation kann insbesondere eine thermische Belastung von Reibkomponenten der Bremsen berücksichtigt werden. Eine thermische Belastung kann jedoch auch eine durch elektromagnetische Effekte insbesondere bei Komponenten dynamischer Bremsen auftretende thermische Belastung betreffen, beispielsweise die thermische Belastung elektrischer Widerstände. Durch Parameter der Konfiguration kann eine Bremse insbesondere hinsichtlich der durch ihre Bremseinrichtungen ausübbare Bremskraft und der thermischen Eigenschaften ihrer Komponenten, insbesondere ihrer Reibkomponenten, insbesondere in Abhängigkeit von einer Fahrzeuggeschwindigkeit und/oder einer Betätigungskraft beschrieben sein. Die thermische Belastung von Komponenten, insbesondere von Reibkomponenten, kann basierend auf entsprechenden Bremsanlagenparametern bestimmt und/oder berücksichtigt werden. Insbesondere kann die Simulationseinrichtung dazu ausgebildet sein, eine thermische Belastung von Reibkomponenten basierend auf Bremsanlagenparametern und gegebenenfalls basierend auf Fahrzeugparametern und/oder Bremsbedingungsparametern zu berechnen und/oder zu bestimmen. Eine thermische Belastung kann beispielsweise als Temperatur und/oder Energieeintrag und/oder Leistungseintrag einer Reibkomponente parametrisiert sein. Es kann vorgesehen sein, dass die Simulationseinrichtung dazu ausgebildet ist, basierend auf einer Bremskraftverteilung die während einer Bremsung bei gegebenen Bremsbedingungen durch die Bremsen ausgeübten Bremskräfte zu berechnen und/oder zu bestimmen. Das Berechnen und/oder Bestimmen von ausgeübten Bremskräften und/oder einer thermischen Belastung über einen zeitlichen Verlauf eines Bremsvorgangs unter einer Bremsbedingung kann als Simulation eines Bremsvorgangs angesehen werden. Bei der Berechnung und/oder Bestimmung eines zeitlichen Verlaufs der Bremskräfte der Bremsen kann insbesondere die thermische Belastung von Reibkomponenten berücksichtigt werden, die sich auf Reibwerte der Reibkomponenten und somit auf ausgeübte Bremskräfte auswirken können. Die Simulationseinrichtung kann es vermögen, basierend auf der Konfiguration ein Modell des Schienenfahrzeugs zu erstellen. Das Modell kann theoretische und experimentelle Erkenntnisse berücksichtigen und die physikalischen Prozesse während einer Bremsung basierend auf den bereitgestellten Parametern zu beschreiben vermögen. Bremsbedingungsparameter können einen Bereich von Fahrzeuggeschwindigkeiten repräsentieren, für die jeweils ein Bremsvorgang zu simulieren ist. Es können auch Kraftschlussbereiche und/oder Bremsungen mit unterschiedlichen Bremsanforderungen durch Bremsbedingungsparameter repräsentiert sein. Unterschiedliche Bremsvorgänge können sich insbesondere hinsichtlich der Bremsbedingungen unterscheiden, unter denen sie simuliert werden. Die Bremskraftverteilung kann von dem Werkzeug und/oder der Simulationseinrichtung bestimmt sein. Die Bremskraftverteilung kann für unterschiedliche Bremsbedingungen eine unterschiedliche Verteilung von Bremskraft auf die mehreren Bremsen vorsehen. Es ist vorstellbar, dass die Simulationseinrichtung dazu ausgebildet ist, eine Optimierung einer Bremskraftverteilung durchzuführen. Die Optimierung kann dabei für unterschiedliche Bremsbedingungen unterschiedliche Verteilungen von Bremskraft auf die mehreren Bremsen ergeben. Es ist auch vorstellbar, dass eine Optimierung während eines Bremsvorgangs eine zeitlich variable Bremskraftverteilung ergibt. Eine Optimierung kann unter Verwendung eines geeigneten Algorithmus' durchgeführt werden, der etwa einen genetischen Algorithmus und/oder einen iterativen Algorithmus und/oder einen rekursiven Algorithmus und/oder einen Algorithmus mit einer Intervallschachtelung von Parametern umfassen kann. Bei der Optimierung können gleichzeitig eine thermische Belastung und eine Bremskraftverteilung berücksichtigt werden, wodurch die wichtigsten Parameter der Bremsanlage während eines Optimierungsvorgangs berücksichtigt werden. Dadurch ergibt sich eine zuverlässige Optimierung. Die Konfiguration kann eine oder mehrere Datensätze umfassen, die Fahrzeugparameter und/oder Bremsanlagenparameter und/oder Bremsbedingungsparameter beschreiben. Es ist vorstellbar, dass die Konfiguration Bremsbedingungsparameter umfasst. Die Bremsanlage kann mindestens eine Reibungsbremse, beispielsweise eine indirekte oder direkte pneumatische Bremse, und eine dynamische Bremse, insbesondere eine elektrodynamische Bremse oder eine rotierende Wirbelstrombremse als Bremsen aufweisen. Entsprechende Bremseinrichtungen der Bremsen können an verschiedenen Rädern, Radachsen, Drehgestellen und/oder Wagen des Schienenfahrzeugs vorgesehen sein, was sich in entsprechenden Bremsanlagenparametern niederschlagen kann. Es kann vorgesehen sein, dass die Einleseeinrichtung es vermag, eine Konfiguration oder Teile einer Konfiguration aus gespeicherten Datensätzen einzulesen und/oder eine Eingabeschnittstelle für einen Benutzer bereitzustellen, um eine Konfiguration und/oder Teile einer Konfiguration eingeben zu können. Die Einleseeinrichtung kann allgemein zum Empfang von Konfigurationsdaten ausgebildet sein. Konfigurationsdaten können Datensätze mit Parametern der Konfiguration aufweisen. Es ist vorstellbar, dass die Einleseeinrichtung es vermag, Konfigurationsdaten aus mehreren Konfigurationsdatenquellen einzulesen. Konfigurationsdatenquellen können beispielsweise Dateien und/oder Benutzereingabeschnittstellen sein. Die Einleseeinrichtung kann dazu ausgebildet sein, Konfigurationsdaten zu bearbeiten, um eine Konfiguration zu erzeugen. Dazu kann die Einleseeinrichtung es vermögen, geeignete Berechnungen und/oder Transformationen durchzuführen, beispielsweise mathematische und/oder Formatstransformationen. Eine Konfiguration kann dabei als virtuelles Abbild eines zu entwickelnden oder zu bearbeitenden Schienenfahrzeugs angesehen werden. Es ist vorstellbar, dass das Werkzeug Benutzerschnittstellen aufweist, die das gemeinsame Bearbeiten einer Konfiguration einer Bremsanlage und/oder von Bremsbedingungsparametern und/oder entsprechenden Konfigurationsdatenquellen durch einen oder mehrere Benutzer ermöglicht. Die Bearbeitung durch mehrere Benutzer kann unabhängig voneinander und/oder gruppenweise ermöglicht sein. Es ist vorstellbar, dass bestimmten Benutzern nur die Bearbeitung bestimmter Teile der Konfiguration und/oder Bremsbedingungsparameter gestattet ist. In diesem Zusammenhang kann das Werkzeug eine geeignete Rechteverwaltung umfassen. Bei der Simulation eines Bremsvorgangs des Schienenfahrzeugs kann die Simulation unterschiedliche Bremsbedingungen berücksichtigen. Eine Simulation eines Bremsvorgangs kann den zeitlichen Verlauf einer Bremsung ausgehend von einer bestimmten Bremsbedingung bezeichnen. Eine Simulation eines Bremsvorgangs kann bei einer bestimmten Endbedingung beendet werden, etwa einer vorgegebenen Endgeschwindigkeit. Die Endbedingung kann als Bremsbedingungsparameter angesehen sein und beispielsweise mit der Art der zu simulierenden Bremsung zusammenhängen. Die Simulationseinrichtung kann dazu ausgelegt sein, eine Schnellbremsung und/oder Notbremsung und/oder Anpassungsbremsung unter verschiedenen Bremsbedingungen zu simulieren. Die Bremsbedingungen können dabei insbesondere den Ausfall bestimmter Bremsen oder Bremseinrichtungen, etwa dynamischer Bremsen, und/oder unterschiedliche Anfangsgeschwindigkeiten des Fahrzeugs bei Beginn der Bremsung betreffen. Simulationen der Bremsanlage oder von Bremsvorgängen können Bremsungen bei unterschiedlichen Bremsbedingungen betreffen. Die Simulationseinrichtung kann dazu ausgebildet sein, bei einer Bremsbedingung, welche einen Ausfall einer Bremse oder Bremseinrichtung angibt, eine Umverteilung einer Bremskraft, die einer ausgefallenen Bremse oder Bremseinrichtung normalerweise zugeordnet ist, auf andere Bremsen oder Bremseinrichtungen zu simulieren. Zur Berücksichtigung der thermischen Belastung von Elementen der Bremsen können insbesondere Parameter der Konfiguration berücksichtigt werden, die Leistungseinträge in Bremsbeläge, auf Bremsscheiben und/oder Bremsklötze beschreiben. Derartige Leistungseinträge können basierend auf einer Fahrzeuggeschwindigkeit, den Reibeigenschaften der entsprechenden Komponenten und/oder einer Bremswirkung oder einer Betätigungskraft zur Betätigung der entsprechenden Bremseinrichtung bestimmt werden. Es kann vorgesehen sein, dass die Simulationseinrichtung basierend auf der Simulation einen Verschleiß von Reibelementen, insbesondere Bremsbelägen zu berechnen und/oder bereitzustellen vermag. Weiterhin kann vorgesehen sein, dass die Simulationseinrichtung es vermag, basierend auf dem Verschleiß von Reibelementen eine mit dem Verschleiß verbundene Feinstaubentwicklung zu berechnen und/oder bereitzustellen. Der Verschleiß kann als eine zu erwartende Verschleißrate und/oder zu erwartende Lebensdauer parametrisiert und/oder berechnet werden. Es kann vorgesehen sein, dass die Simulationseinrichtung dann, wenn mit einer durch die Konfiguration vorgegebenen Bremsanlage eine gewünschte Bremskraft bei einem oder mehreren Bremsvorgängen nicht zu erreichen ist, ein entsprechendes Warnsignal bereitstellt, das als Teil der Ergebnisdaten angesehen werden kann. Es ist ferner vorstellbar, dass das Werkzeug und/oder die Simulationseinrichtung, dann wenn bestimmte thermische Bedingungen während eines Bremsvorgangs nicht erfüllt sind, ein entsprechendes Warnsignal erzeugt. Auf dieses Warnsignal kann als Teil der Ergebnisdaten bereitgestellt werden und/oder mit einer erhöhten Priorität durch das Werkzeug behandelt werden. Es ist zweckmäßig, dass die Simulationseinrichtung dazu ausgebildet ist, bei der Simulation Bremskraftverteilungen zu variieren. Es kann vorgesehen sein, dass die Simulationseinrichtung es vermag, beim Variieren von Bremskraftverteilungen und/oder beim Simulieren eines Bremsvorgangs verschiedene Nebenbedingungen zu berücksichtigen, die als Bremsbedingungsparameter definiert sein können. Derartige Nebenbedingungen können insbesondere einen maximal zulässigen Verschleiß von Reibelementen einer Reibungsbremse und/oder eine maximale Bremskrafterzeugung durch verschleißfreie Bremsen und/oder eine maximale Energierückgewinnung durch regenerative Bremsen und/oder eine Verfügbarkeit von Bremsen oder Ähnliches betreffen. Es ist vorstellbar, dass die Simulationseinrichtung dazu ausgebildet ist, Nebenbedingungen insbesondere bei einer Optimierung der Bremskraftverteilung zu berücksichtigen. Dabei kann beispielsweise eine Optimierung der Bremskraftverteilung erfolgen, um einen minimalen Verschleiß von Reibkomponenten über einen Bremsvorgang zu erreichen. Die Simulationseinrichtung kann dazu ausgebildet sein, bei der Simulation einen Verschleiß, insbesondere Verschleiß von Reibkomponenten, Energierückgewinnung durch generatorische Bremsen, wie beispielsweise einer elektrodynamische Bremse, eine Kraftschlussausnutzung für einen gegebenen Kraftschluss oder Kraftschlussbereich zwischen Rad und Schiene, die Einhaltung von Kraftschlussgrenzen zwischen Rad und Schiene, eine Geräuschentwicklung, einen Leistungseintrag zwischen Reibkomponenten einer Reibungsbremse, einen Leistungseintrag zwischen Rad und Schiene, eine Verfügbarkeit von Bremsen oder Bremseinrichtungen, einen Ausgleich von Belagreibwertschwankungen und/oder weitere Anforderungen in Form entsprechender Parameter zu berücksichtigen und/oder eine Bremskraftverteilung unter Berücksichtung entsprechender Parameter zu optimieren. Insbesondere kann vorgesehen sein, dass die Simulationseinrichtung es vermag, Schwankungen von Reibwerten von Reibkomponenten bei der Simulation und/oder Optimierung zu berücksichtigen. Derartige Schwankungen können sich in Abhängigkeit von unterschiedlichen Parametern eines Bremsvorgangs ergeben, insbesondere können derartige Schwankungen von einer Temperatur der Reibkomponenten abhängig sein. Die Simulationseinrichtung kann dazu ausgebildet sein, den Temperaturverlauf für Reibkomponenten während eines Bremsvorgangs zu berechnen und basierend auf dem Temperaturverlauf eine Reibwertschwankung zu berücksichtigen. Temperaturabhängige Reibwerte können als Bremsanlagenparameter vorgesehen sein. Reibwertschwankungen können auch zufällige Abweichungen von einem vorgegebenen Reibwert betreffen, die durch Herstellungstoleranzen bedingt sein können. Insbesondere beim Einsatz einer Vielzahl von Reibkomponenten können sich derartige Abweichungen bei einer Bremsung bemerkbar machen können. Die Simulationseinrichtung kann dazu ausgebildet sein, derartige stochastische Abweichungen zu berücksichtigen. Es ist allgemein vorstellbar, dass die Simulationseinrichtung es beim Bestimmen einer Bremskraftverteilung und/oder bei einer Simulation und/oder einer Optimierung vermag, Reibwertschwankungen durch entsprechende Verteilung von Bremskraft auf anderer Bremsen und/oder Bremseinrichtungen auszugleichen, um beispielsweise eine gewünschte Bremskraft bereitstellen zu können. Eine derartige Verteilung von Bremskraft kann über das Fahrzeug, also zugweit erfolgen. Bei der Verteilung können wie erwähnt Nebenbedingungen berücksichtigt werden. Ergebnisdaten können auf der Simulation und/oder einer Optimierung und/oder einer Berechnung bestimmter Werte basieren. Ergebnisdaten können insbesondere für verschiedene Bremsvorgänge einen zeitlichen Verlauf einer Bremskraft und/oder einer Bremskraftverteilung und/oder einer thermischen Belastung repräsentieren. Es ist vorstellbar, dass Ergebnisdaten Warnsignale enthalten, die darauf hinweisen, dass eine oder mehrere Bremsbedingungsparameter bei einer gegebenen Konfiguration nicht erfüllt werden können. Dies kann insbesondere thermische Bedingungen und/oder Nebenbedingungen betreffen. Ein Benutzer, dem ein entsprechendes Warnsignal bereitgestellt wird, kann dann beispielsweise die Konfiguration ändern, um andere Reibkomponenten einzusetzen, die beispielsweise höhere zulässige Temperaturen und/oder eine geringere Temperaturerhöhung aufweisen. Die Ausgabeeinrichtung kann dazu ausgebildet sein, Ergebnisdaten zu bearbeiten, um eine Ausgabe bereitzustellen. Es ist vorstellbar, dass eine Ausgabe das Speichern von bearbeiteten und/oder unbearbeiteten Ergebnisdaten als einen oder mehrere Datensätze umfasst. Es kann vorgesehen sein, dass die Ausgabeeinrichtung es vermag, basierend auf Ergebnisdaten einen oder mehrere Testfälle zu exportieren. Ein solcher Testfall kann beispielsweise an einem Modell des Schienenfahrzeugs und/oder der Bremsanlage getestet werden.

Es kann vorgesehen sein, dass die Ausgabe eine grafische Ausgabe umfasst. Durch die grafische Ausgabe kann eine Visualisierung insbesondere einer Bremskraftverteilung oder verschiedenen Optionen für die Bremskraftverteilung erfolgen. Dies erleichtert die Entwicklung der Bremsanlage. Die Ausgabeeinrichtung und/oder das Werkzeug können dazu ausgebildet sein, Ergebnisdaten für eine graphische Ausgabe und/oder Visualisierung zu bearbeiten.

Die Ausgabe kann Steuerdaten zum Ansteuern des Schienenfahrzeugs umfassen. Derartige Steuerdaten können Steuerparameter und/oder Steuerbefehle umfassen. Es ist zweckmäßig, wenn eine Steuereinrichtung des Schienenfahrzeugs es vermag, Steuerdaten direkt zur Ansteuerung der Bremsanlage einzulesen und/oder zu verwenden. Steuerdaten können insbesondere für verschiedene Bremsbedingungen jeweils geeignete Bremskraftverteilungen und/oder zeitliche Verläufe von Bremskraftverteilungen und/oder Bremskräften definieren, welche die Steuereinrichtung ansteuern soll. Es ist insbesondere vorstellbar, dass die Steuerparameter auf eine oder mehrere Steuereinrichtungen eines fertigen Schienenfahrzeugs übertragbar sind, um dort unter verschiedenen zuvor simulierten Bremsbedingungen eine Ansteuerung der Bremsanlage des Schienenfahrzeugs basierend auf dem Steuerdatensatz zu ermöglichen. Somit kann durch die Ausgabeeinrichtung eine Ausgabe erzeugt werden, welche direktes Ansteuern des Schienenfahrzeugs ermöglicht. Aufgrund der Berücksichtigung der thermischen Belastung und der Bremskraftverteilung bei der Simulation und/oder Optimierung bietet ein solcher Steuerdatensatz bereits eine optimierte Ansteuerung der Bremsanlage in verschiedenen Bremsbedingungen, die insbesondere über eine Notbremsung hinausgehen. Dies ermöglicht insgesamt eine verbesserte Ansteuerung der Bremsanlage eines Schienenfahrzeugs im Betrieb, da eine Optimierung der Bremskraftverteilung unter gleichzeitiger Berücksichtung thermischer Erfordernisse und gegebenenfalls von Nebenbedingungen erfolgt ist.

Es kann vorgesehen sein, dass die Bremsanlage eine erste Bremse aufweist, die eine Reibungsbremse ist, und die Konfiguration entsprechende Fahrzeugparameter und/oder Bremsanlagenparameter aufweist, welche die erste Bremse betreffen.

Die Bremsanlage kann eine weitere Bremse aufweisen, die eine dynamische Bremse ist, wobei die Konfiguration entsprechende Fahrzeugparameter und/oder Bremsanlagenparameter aufweist, welche die weitere Bremse betreffen.

Alternativ oder zusätzlich kann die Bremsanlage eine weitere Bremse aufweisen, die eine kraftschlussunabhängige Bremse ist, wobei die Konfiguration entsprechende Fahrzeugparameter und/oder Bremsanlagenparameter aufweist, welche diese weitere Bremsanlage betreffen.

Die Bremsanlagenparameter können die Reibeigenschaften von Reibkomponenten mindestens einer Bremse betreffen. Derartige Reibkomponenten können beispielsweise Bremsbeläge, Bremsscheiben und/oder Bremsklötze sein. Es ist vorstellbar, dass die Simulationseinrichtung dazu ausgebildet ist, bei der Simulation die Reibeigenschaften zu berücksichtigen. Insbesondere kann vorgesehen sein, dass die Simulationseinrichtung dazu eingerichtet ist, die thermische Belastung von Elementen, insbesondere von Reibkomponenten, unter Berücksichtigung der Reibeigenschaften bei der Simulation zu berücksichtigen.

Es kann vorgesehen sein, dass die Bremsanlage eine erste Bremse aufweist, die eine direkte oder indirekte pneumatische Bremse ist. Derartige Bremsen sind insbesondere bei Hochgeschwindigkeitszügen häufig im Einsatz. Bei einer indirekten pneumatischen Bremse kann es besonders wichtig sein, dass die Konfiguration Bremsanlagenparameter bezüglich einer Bremssignalausbreitung aufweist, da sich ein Bremssignal hier pneumatisch ausbreiten kann.

Die Erfindung betrifft außerdem ein computerlesbares Speichermedium, auf dem auf einem Computersystem ausführbarer Programmcode gespeichert ist, welcher ein hierin beschriebenes Werkzeug implementiert.

Die Erfindung betrifft außerdem ein Verfahren zur Bremsanlagenentwicklung für ein Schienenfahrzeug mit einer Bremsanlage, welche mehrere Bremsen aufweist, die jeweils auf unterschiedliche Art eine Bremswirkung erzeugen, wobei das Verfahren das Einlesen, durch eine Einleseeinrichtung, einer Konfiguration eines Schienenfahrzeugs umfasst, wobei die Konfiguration Fahrzeugparameter und Bremsanlagenparameter des Schienenfahrzeugs umfasst. Das Verfahren umfasst ferner das Simulieren, durch eine Simulationseinrichtung, von Bremsvorgängen des Schienenfahrzeugs unter Berücksichtigung von Bremsbedingungsparametern basierend auf der Konfiguration, wobei bei dem Simulieren eine Bremskraftverteilung zwischen den mehreren Bremsen und eine thermische Belastung von Komponenten, insbesondere Reibkomponenten, der Bremsen berücksichtigt werden. Ferner stellt die Simulationseinrichtung Ergebnisse der Simulation als Ergebnisdaten bereit. Das Verfahren umfasst ferner das Bereitstellen, durch eine Ausgabeeinrichtung, einer Ausgabe basierend auf Ergebnisdaten. Die Einrichtungen können Teile eines hierin beschriebenen Werkzeugs der Bremsanlagenentwicklung sein. Die Ausgabe kann eine grafische Ausgabe umfassen. Es kann vorgesehen sein, dass die Ausgabeeinrichtung Steuerdaten zum Ansteuern des Schienenfahrzeugs ausgibt. Die Bremsanlage kann eine erste Bremse aufweisen, die eine Reibungsbremse ist, wobei die Konfiguration entsprechende Fahrzeugparameter und/oder Bremsanlagenparameter aufweisen kann, welche die erste Bremse betreffen. Die Bremsanlage kann eine weitere Bremse aufweisen, die eine dynamische Bremse ist, wobei die Konfiguration entsprechende Fahrzeugparameter und/oder Bremsanlagenparameter aufweisen kann, welche die weitere Bremse betreffen. Die Bremsanlage kann eine weitere Bremse aufweisen, die eine kraftschlussunabhängige Bremse ist, wobei die Konfiguration entsprechende Fahrzeugparameter und/oder Bremsanlagenparameter aufweisen kann, welche diese weitere Bremse betreffen. Bremsanlagenparameter können Reibeigenschaften von Reibkomponenten mindestens einer Bremse betreffen. Die Bremsanlage kann eine erste Bremse aufweisen, die eine direkte oder indirekte pneumatische Bremse ist.

Die Erfindung wird nun mit Bezug auf die begleitende Zeichnung anhand bevorzugter Ausführungsformen beispielhaft erläutert

Es zeig:

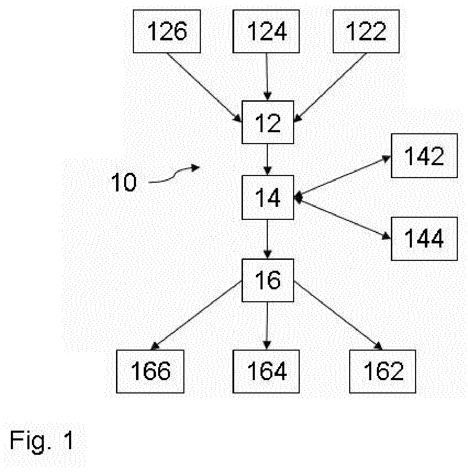

- Figur 1: eine schematische Darstellung eines Werkzeugs zur Bremsanlagenentwicklung für Schienenfahrzeuge.

In Figur 1 ist ein Werkzeug 10 zur Bremsanlagenentwicklung gezeigt. Das Werkzeug 10 umfasst eine Einleseeinrichtung 12 und eine Simulationseinrichtung 14. Die Einleseeinrichtung 12 und die Simulationseinrichtung 14 sind über geeignete Schnittstellen zur Datenübertragung miteinander verbunden. Das Werkzeug 10 kann als Software implementiert sein, welche auf einem Computersystem ausgeführt wird. Ferner ist eine Ausgabeeinrichtung 16 vorgesehen, die über geeignete Schnittstellen mit der Simulationseinrichtung 14 verbunden ist. Die Einleseeinrichtung 12 ist dazu ausgebildet, eine Konfiguration eines Schienenfahrzeugs einzulesen. Die Konfiguration kann Fahrzeugparameter und/oder Bremsanlagenparameter und/oder Bremsbedingungsparameter betreffen. Daten der Konfiguration können aus unterschiedlichen Quellen stammen und/oder eingegeben werden. So können beispielsweise Parameter, welche die Leittechnik betreffen, von einer ersten Konfigurationsdatenquelle 122 eingelesen werden. Die erste Konfigurationsdatenquelle 122 kann beispielsweise Leittechnikparameter betreffen, also die Steuereinrichtung des Schienenfahrzeugs, insbesondere die Bremssteuereinrichtung. Ferner können eine zweite Konfigurationsdatenquelle 124 und eine dritte Konfigurationsdatenquelle 126 vorgesehen sein. Die Konfigurationsdatenquelle 124 kann insbesondere Fahrzeugparameter betreffen, welche insbesondere die Anordnung von Wagen des Schienenfahrzeugs und die Anordnung von Bremsen und Bremseinrichtungen auf dem Schienenfahrzeug betreffen. Ferner kann die zweite Konfigurationsdatenquelle 124 Erfordernisse hinsichtlich eines Verschleißes, der Umsetzung von Bremsanforderungen, Höchstgeschwindigkeiten des Schienenfahrzeugs und ähnliche Fahrzeugparameter und Bremsbedingungsparameter betreffen. Die Konfigurationsdatenquelle 124 kann insbesondere Erfordernisse an ein Schienenfahrzeug betreffen, die von einem möglichen Kunden vorgegeben werden, für den eine Bremsanlage entwickelt werden soll. Die dritte Konfigurationsdatenquelle 126 kann insbesondere Bremsanlagenparameter betreffen, die eine genaue Ausgestaltung der Bremsen betreffen. Die dritte Konfigurationsdatenquelle kann insbesondere Reibeigenschaften von Reibkomponenten einer Reibungsbremse parametrisieren. Allgemein kann die dritte Konfigurationsdatenquelle 126 mechanische Eigenschaften der Bremsanlage, der Bremsen und einzelner Bremseinrichtungen betreffen. Die Einleseeinrichtung 12 liest von den Konfigurationsdatenquellen 122, 124, 126 entsprechende Konfigurationsdaten ein, um eine Konfiguration des Schienenfahrzeugs bereitzustellen. Somit ergibt sich aus der Konfiguration ein virtuelles Abbild eines Schienenfahrzeugs, bei dem insbesondere unterschiedliche Bremsen der Bremsanlage des Schienenfahrzeugs abgebildet sind. Über eine geeignete Schnittstelle stellt die Einleseeinrichtung 12 die Konfiguration der Simulationseinrichtung 14 bereit. Die Simulationseinrichtung 14 ist dazu ausgebildet, basierend auf der Konfiguration eine Simulation von Bremsvorgängen des Schienenfahrzeugs, insbesondere unter Berücksichtigung von Bremsbedingungsparametern, Fahrzeugparametern und Bremsanlagenparametern durchzuführen. Dabei kann insbesondere eine Bremskraftverteilung zwischen mehreren Bremsen simuliert werden. Die Simulationseinrichtung kann dabei für bestimmte Bremsbedingungen mehrere Bremsvorgänge mit unterschiedlichen Bremskraftverteilungen simulieren, um eine Optimierung der Bremskraftverteilung für eine Bremsbedingung zu erreichen. Es ist selbstverständlich vorstellbar, dass eine Optimierung für verschiedene Bremsbedingungen durchgeführt wird. In diesem Beispiel weist die Simulationseinrichtung 14 ein Bremsberechnungsmodul 142 und ein thermisches Belastungsmodul 144 auf. Das Bremsberechnungsmodul 142 vermag es, basierend auf einer durch die Simulationseinrichtung vorgegebenen Bremskraftverteilung unter Berücksichtigung der Konfiguration eine Bremsberechnung durchzuführen. Das Modul zur Berechnung der thermischen Belastung 144 vermag es, entsprechend eine thermische Belastung von Reibkomponenten, insbesondere Bremsbelägen, während eines derartig simulierten Bremsvorgangs zu berechnen. Das Modul 142 kann mit dem Modul 144 Daten austauschen, um beispielsweise eine durch die Temperaturentwicklung der Reibkomponenten entstehende Reibwertschwankungen bei der Bremsberechnung zu berücksichtigen. Es ist auch vorstellbar, dass das Modul 144 zur Berechnung der thermischen Belastung und das Modul 142 zur Bremsberechnung als ein Modul integriert sind. Eine Optimierung der Bremskraftverteilung kann unter Berücksichtigung von Nebenbedingungen durchgeführt wird. Die Nebenbedingungen können beispielsweise durch Bremsbedingungsparameter gegeben sein und bestimmten Wünschen oder Anforderungen eines Kunden hinsichtlich Verschleißes und/oder Bremsleistung entsprechen. Bei der Optimierung durch die Simulationseinrichtung 14 kann beispielsweise eine möglichst verschleißfreie Bremskraftverteilung für einen oder mehrere Bremsvorgänge bestimmt werden, die bestimmten thermischen Vorgaben genügt, die durch geeignete Parameter repräsentiert sein können. Insbesondere kann für den Fall einer Notbremsung und/oder Schnellbremsung und/oder Anpassungsbremsungen mit unterschiedlichen Bremsanforderungen und/oder bei unterschiedlichen Geschwindigkeiten jeweils eine Optimierung von Bremskraftverteilungen vorgenommen werden. Die Simulationseinrichtung 14 erzeugt basierend auf der Simulation Ergebnisdaten, welche sie über eine geeignete Schnittstelle der Ausgabeeinrichtung 16 bereitstellt. Die Ausgabeeinrichtung 16 weist eine Visualisierungseinrichtung 162 auf, welche es vermag, Ergebnisdaten zu visualisieren. Zur Visualisierung können Ergebnisdaten für eine grafische Darstellung etwa auf einem Bildschirm und/oder über einen Drucker bearbeitet werden. Die Ausgabeeinrichtung 16 weist ferner ein Steuerungsmodul 164 auf. Das Steuerungsmodul 164 vermag es, basierend auf Ergebnisdaten Steuerdaten für eine Bremsanlage des Schienenfahrzeugs bereitzustellen. Die Daten können auf einer Steuereinrichtung des Schienenfahrzeugs zur Ansteuerung der Bremsanlage dienen. Das Steuerungsmodul vermag es, Steuerdaten in eine Form zu bringen, welche eine vorgesehene Steuereinrichtung des Schienenfahrzeugs zu lesen und in Steuerbefehle zur Ansteuerung der Bremsanlage umzusetzen vermag. Das Steuerungsmodul 164 vermag es, die Steuerdaten beispielsweise tabellarisch und/oder in Form eines Algorithmus und/oder in Form von Steuerbefehlen für eine Steuereinrichtung des Schienenfahrzeugs bereitzustellen. Die Daten können beispielsweise auf geeignete Weise auf einem Speichermedium gespeichert werden. Die Ausgabeeinrichtung 16 umfasst ferner ein Testexportmodul 166. Das Testexportmodul 166 vermag es, auf Ergebnisdaten basierende Testfälle zu exportieren, um sie beispielsweise mit einer Testsoftware auszuführen. Die Module der Ausgabeeinrichtung 16 können auch als in einem einzelnen Modul ausgebildet sein.

### Bezugszeichenliste

- 10: Werkzeug zur Bremsanlagenentwicklung
- 12: Eingabeeinrichtung
- 14: Simulationseinrichtung
- 16: Ausgabeeinrichtung
- 122: erste Konfigurationsdatenquelle
- 124: zweite Konfigurationsdatenquelle
- 126: dritte Konfigurationsdatenquelle
- 142: Bremsberechnungsmodul
- 144: thermisches Belastungsmodul
- 162: Visualisierungsmodul
- 164: Steuerungsmodul
- 166: Testexportmodul

## Patentansprüche

1. Werkzeug (10) zur Bremsanlagenentwicklung für Schienenfahrzeuge mit einer Bremsanlage, welche mehrere Bremsen aufweist, die jeweils auf unterschiedliche Art eine Bremswirkung erzeugen, wobei das Werkzeug umfasst;
eine Einleseeinrichtung (12), die es vermag, eine Konfiguration eines Schienenfahrzeugs einzulesen, wobei die Konfiguration Fahrzeugparameter und Bremsanlagenparameter des Schienenfahrzeugs umfasst;
eine Simulationseinrichtung (14), die es vermag, basierend auf der Konfiguration Bremsvorgänge des Schienenfahrzeugs unter Berücksichtigung von Bremsbedingungsparametern zu simulieren, wobei bei der Simulation eine Bremskraftverteilung zwischen den mehreren Bremsen und eine thermische Belastung von Komponenten der Bremsen berücksichtigt werden, wobei die Simulationseinrichtung (14) es vermag, Ergebnisse der Simulation als Ergebnisdaten bereitzustellen;
eine Ausgabeeinrichtung (16), die es vermag, eine Ausgabe basierend auf Ergebnisdaten bereitzustellen.

2. Werkzeug nach Anspruch 1, wobei die Ausgabe eine graphische Ausgabe umfasst.

3. Werkzeug nach Anspruch 1 oder 2, wobei die Ausgabe Steuerdaten zum Ansteuern des Schienenfahrzeugs umfasst.

4. Werkzeug nach einem der vorhergehenden Ansprüche, wobei die Bremsanlage eine erste Bremse aufweist, die eine Reibungsbremse ist, und die Konfiguration Fahrzeugparameter und/oder Bremsanlagenparameter aufweist, welche die erste Bremse betreffen.

5. Werkzeug nach einem der vorhergehenden Ansprüche, wobei die Bremsanlage eine weitere Bremse aufweist, die eine dynamische Bremse ist, und die Konfiguration Fahrzeugparameter und/oder Bremsanlagenparameter aufweist, welche diese weitere Bremse betreffen.

6. Werkzeug nach einem der vorhergehenden Ansprüche, wobei die Bremsanlage eine weitere Bremse aufweist, die eine kraftschlussunabhängige Bremse ist, und die Konfiguration Fahrzeugparameter und/oder Bremsanlagenparameter aufweist, welche diese weitere Bremse betreffen.

7. Werkzeug nach einem der vorhergehenden Ansprüche, wobei die Bremsanlagenparameter Reibeigenschaften von Reibkomponenten mindestens einer Bremse betreffen.

8. Werkzeug nach einem der vorhergehenden Ansprüche, wobei die Bremsanlage eine erste Bremse aufweist, die eine direkte oder indirekte pneumatische Bremse ist.

9. Computerlesbares Speichermedium, auf dem auf einem Computersystem ausführbarer Programmcode gespeichert ist, welcher ein Werkzeug (10) nach einem der Ansprüche 1 bis 8 implementiert.

10. Verfahren zur Bremsanlagenentwicklung für ein Schienenfahrzeug mit einer Bremsanlage welche mehrere Bremsen aufweist, die jeweils auf unterschiedliche Art eine Bremswirkung erzeugen, wobei das Verfahren die Schritte aufweist:
Einlesen, durch eine Einleseeinrichtung (12), einer Konfiguration eines Schienenfahrzeugs, wobei die Konfiguration Fahrzeugparameter und Bremsanlagenparameter des Schienenfahrzeugs umfasst;
Simulieren, durch eine Simulationseinrichtung (14), von Bremsvorgängen des Schienenfahrzeugs unter Berücksichtigung von Bremsbedingungsparametern basierend auf der Konfiguration, wobei bei dem Simulieren eine Bremskraftverteilung zwischen den mehreren Bremsen und eine thermische Belastung von Komponenten der Bremsen berücksichtigt werden, wobei ferner durch die Simulationseinrichtung (14) Ergebnisse der Simulation als Ergebnisdaten bereitgestellt werden;
Bereitstellen, durch eine Ausgabeeinrichtung (16), einer Ausgabe basierend auf Ergebnisdaten.

## Claims

1. Tool (10) for developing brake systems for rail vehicles having a brake system comprising several brakes generating a braking action in different ways, the tool comprising:
a read-in device (12) capable of reading in a configuration of a rail vehicle, the configuration comprising vehicle parameters and brake system parameters of the rail vehicle;
a simulation device (14) capable of simulating braking processes of the rail vehicle on the basis of the configuration and taking into account braking condition parameters, wherein in the simulation a brake force distribution among the several brakes and a thermal loading of components of the brakes are taken into account, wherein the simulation device (14) is capable of providing results of the simulation as result data;
an outputting device (16) capable of providing an output based on result data.

2. Tool according to claim 1, wherein the output includes a graphic output.

3. Tool according to claim 1 or 2, wherein the output includes control data for controlling the rail vehicle.

4. Tool according to any of the preceding claims, wherein the brake system comprises a first brake which is a friction brake, and wherein the configuration comprises vehicle and/or brake system parameters relating to the first brake.

5. Tool according to any of the preceding claims, wherein the brake system comprises a further brake which is a dynamic brake, and wherein the configuration comprises vehicle and/or brake system parameters relating to this further brake.

6. Tool according to any of the preceding claims, wherein the brake system comprises a further brake which is a force closure-independent brake, and wherein the configuration comprises vehicle and/or brake system parameters relating to this further brake.

7. Tool according to any of the preceding claims, wherein the brake system parameters relate to frictional properties of friction components of at least one brake.

8. Tool according to any of the preceding claims, wherein the brake system comprises a first brake which is a direct or indirect pneumatic brake.

9. Computer-readable storage medium on which a programme code which is executable on a computer system and implements a tool (10) according to any of claims 1 to 8 is stored.

10. Method for developing brake systems for rail vehicles having a brake system comprising several brakes generating a braking action in different ways, the method comprising the steps of:
the reading-in of a configuration of a rail vehicle by a read-in device (12), the configuration comprising vehicle parameters and brake system parameters of the rail vehicle;
the simulation of braking processes of the rail vehicle by a simulation device (14), taking into account braking condition parameters based on the configuration, wherein in the simulation a brake force distribution among the several brakes and a thermal loading of components of the brakes are taken into account, wherein further results of the simulation as result data are provided by the simulation device (14);
the provision of an output based on result data by an outputting device (16).

## Revendications

1. Outil (10) de développement de systèmes de freinage de véhicules ferroviaires, comprenant un système de freinage, qui a plusieurs freins produisant chacun un effet de freinage de type différent, l'outil comprenant :
un dispositif (12) de lecture, qui permet de lire une configuration d'un véhicule ferroviaire, la configuration comprenant des paramètres de véhicule et des paramètres de systèmes de freinage du véhicule ferroviaire ;
un dispositif (14) de simulation, qui permet, sur la base de la configuration, de simuler des opérations de freinage du véhicule ferroviaire en tenant compte de paramètres de condition de freinage, dans lequel, dans la simulation, on tient compte d'une répartition de force de freinage entre les plusieurs freins et d'une charge thermique d'éléments des freins, le dispositif (14) de simulation permettant de disposer de résultats de la simulation sous la forme de données de résultat ;
un dispositif (16) de sortie, qui permet de mettre à disposition une sortie reposant sur des données de résultat.

2. Outil suivant la revendication 1, dans lequel la sortie comprend une sortie graphique.

3. Outil suivant la revendication 1 ou 2, dans lequel la sortie comprend des données de commande du véhicule ferroviaire.

4. Outil suivant l'une des revendications précédentes, dans lequel l'installation de freinage a un premier frein, qui est un frein à friction, et la configuration a des paramètres de véhicule et/ou des paramètres de systèmes de freinage, qui concernent le premier frein.

5. Outil suivant l'une des revendications précédentes, dans lequel l'installation de freinage a un autre frein, qui est un frein dynamique, et la configuration a des paramètres de véhicule et/ou des paramètres de systèmes de freinage, qui concernent cet autre frein.

6. Outil suivant l'une des revendications précédentes, dans lequel l'installation de freinage a un autre frein, qui est un frein qui est indépendant de l'adhérence, et la configuration a des paramètres de véhicule et/ou des paramètres de systèmes de freinage, qui concernent cet autre frein.

7. Outil suivant l'une des revendications précédentes, dans lequel les paramètres de systèmes concernent des propriétés de friction d'éléments de friction d'au moins un frein.

8. Outil suivant l'une des revendications précédentes, dans lequel le système de freinage a un premier frein, qui est un frein pneumatique direct ou indirect.

9. Support de mémoire déchiffrable par ordinateur, sur lequel est mémorisé un code de programme, qui peut être réalisé sur un système d'ordinateur et qui met en oeuvre un outil (10) suivant l'une des revendications 1 à 8.

10. Procédé de développement d'installation de freinage d'un véhicule ferroviaire ayant un système de freinage, qui a plusieurs freins produisant chacun un effet de freinage de type différent, le procédé ayant les stades :
lecture par un dispositif (12) de lecture d'une configuration d'un véhicule ferroviaire, la configuration comprenant des paramètres de véhicule et des paramètres de systèmes de freinage du véhicule ferroviaire ;
simulation par un dispositif (14) de simulation d'opérations de freinage du véhicule ferroviaire en tenant compte de paramètres de conditions de freinage reposant sur la configuration, dans lequel, dans la simulation, on tient compte d'une répartition de forces de freinage entre les plusieurs freins et d'une charge thermique d'éléments des freins, dans lequel, en outre, par le dispositif (14) de simulation, on met à disposition des résultats de la simulation sous la forme de données de résultat ;
mise à disposition, par un dispositif (16) de sortie, d'une sortie reposant sur des données de résultat.
